# EUROPEAN PATENT SPECIFICATION

(11) **EP 2 789 884 B1**
(45) Date of publication and mention of the grant of the patent: **28.02.2018**
(21) Application number: 14163776.9
(22) Date of filing: 07.04.2014
(51) Int. Cl.: F16K 7/12

(54) **Flow regulating apparatus**
Flussregulierende Vorrichtung
Appareil de régulation de débit

(30) Priority: 10.04.2013 JP 2013082170
(43) Date of publication of application: 15.10.2014
(73) Proprietor: Surpass Industry Co., Ltd., Gyoda-shi Saitama 361-0037 (JP)
(72) Inventor: Hasunuma, Masahiro, Gyoda-shi, Saitama 361-0037 (JP); Inoue, Atsushi, Gyoda-shi, Saitama 361-0037 (JP)
(74) Representative: McWilliams, David John

(56) References cited:
- US-A- 3 134 570
- US-A1- 2009 072 173
- US-A1- 2011 282 276

## Description

### {Technical Field}

The present invention relates to a flow regulating apparatus.

### {Background Art}

Conventionally, there has been known a flow regulating apparatus including a body in which a valve hole is provided, and a valve body part that has a needle part inserted in the valve hole (For example, refer to PTL 1.).

The flow regulating apparatus disclosed in PTL 1 is the regulator that regulates a position of the needle part inserted in the valve hole and a gap formed between an inner peripheral surface of the valve hole and an outer peripheral surface of the needle part, to thereby regulate a flow rate of a fluid. The flow regulating apparatus disclosed in PTL 1 blocks flow of the fluid by bringing a bottom surface of a needle housing part provided around the valve hole into contact with a planar portion provided at a base end of the needle part.

### {Citation List}

### {Patent Literature}

{PTL 1}
Japanese Unexamined Patent Application, Publication No. 2006-153262

### {Summary}

### {Technical Problem}

In the flow regulating apparatus disclosed in PTL 1, near the valve hole, the planar portion provided at the base end of the needle part gets contact with the bottom surface (a valve seat part) of the needle housing part. Therefore, a diameter of the valve hole connected to the bottom surface of the needle housing part near the valve hole may gradually deform in a direction of being reduced or expanded by repeating blocking of the flow of the fluid (contact of the needle part with the valve seat part).

Accordingly, in the flow regulating apparatus disclosed in PTL 1, the diameter of the valve hole may deform, and flow rate regulation may not be appropriately performed.

In addition, since the needle housing part is formed as a circular concave part in a planar view in the flow regulating apparatus disclosed in PTL 1, failure may occur in which the fluid is retained or particles etc. contained in the fluid are accumulated in an outer edge portion of the bottom surface of the needle housing part.

As disclosed herein, a flow regulating apparatus that can suppress deformation of a valve hole, and that can suppress retention of a fluid and accumulation of particles etc. contained in the fluid is provided.

### {Solution to Problem}

The present disclosure employs the following means in order to solve the above-described problems.

A flow regulating apparatus pertaining to the present disclosure includes: a valve body part having a projecting part provided at a tip thereof; a circular valve chamber in a planar view in which the valve body part is housed; an inflow passage through which a fluid having flowed in from outside flows; a valve hole in which the projecting part can be inserted, and that makes the inflow passage and the valve chamber communicate with each other; a flow rate regulation part that regulates an insertion amount of the projecting part into the valve hole to thereby regulate a flow rate of the fluid that flows into the valve chamber from the valve hole; and a taper-shaped valve seat part in which a distance from a center axis gradually becomes longer at a constant inclination as it gets away from the valve hole along a center axis direction of the valve chamber, and in the flow regulating apparatus, in a blocking state where inflow of the fluid from the valve hole to the valve chamber is blocked, and a gap is provided between an edge (32a) of the valve hole (32) and an outer surface of the projecting part (5a), and in that a contact position where the valve body part and the valve seat part come into contact with each other is
separated from the edge serving as a boundary of the valve hole and the valve seat part.

In the flow regulating apparatus pertaining to the present disclosure, in the blocking state where inflow of the fluid from the valve hole to the valve chamber is blocked, the contact position where the valve body part and the valve seat part come into contact with each other is separated from the valve hole edge serving as the boundary of the valve hole and the valve seat part. Accordingly, a stress generated at the valve seat part in the contact position is prevented from being transmitted to the valve hole edge directly and at a shortest distance, and failure in which the valve hole deforms is suppressed.

In addition, the valve seat part is formed in a taper shape in which the distance from the center axis gradually expands at a constant inclination as it gets away from the valve hole along the center axis direction of the valve chamber. Therefore, transmission directions of the stress generated at the valve seat part in the contact position correspond to directions getting away from the valve hole, and failure in which the valve hole deforms is suppressed. Furthermore, since the fluid having flowed in from the valve hole smoothly flows along the taper-shaped valve seat part, retention of the fluid and accumulation of particles etc. contained in the fluid are suppressed.

In a flow regulating apparatus of a first aspect of the present disclosure, the valve body part includes a diaphragm part to define the valve chamber together with the valve seat part, one end of the valve seat part is connected to the valve hole edge, and the other end of the valve seat part is connected to the diaphragm part.

By configuring the flow regulating apparatus as described above, the fluid having flowed into the valve chamber from the valve hole edge connected to the one end of the valve seat part is smoothly guided by the taper-shaped valve seat part in which the distance from the center axis gradually expands at a constant inclination until it reaches the diaphragm part, which is the other end of the valve seat part. Accordingly, retention of the fluid and accumulation of the particles etc. contained in the fluid can be suppressed more reliably.

In a flow regulating apparatus of a second aspect of the present disclosure, the valve body part includes a diaphragm part to define the valve chamber together with the valve seat part, the valve body part includes a connection part to connect the valve seat part and the diaphragm part, and the connection part is formed in a circular arc shape in a sectional view in a direction parallel to the center axis.

By configuring the flow regulating apparatus as described above, the fluid is guided along the circular arc-like connection part in the sectional view in the direction parallel to the center axis, and thus retention of the fluid and accumulation of the particles etc. contained in the fluid can be suppressed more reliably.

According to some embodiments of the disclosure set forth therein, can be provided the flow regulating apparatus that can suppress deformation of the valve hole, and that can suppress retention of the fluid and accumulation of the particles etc. contained in the fluid.

### {Brief Description of Drawings}

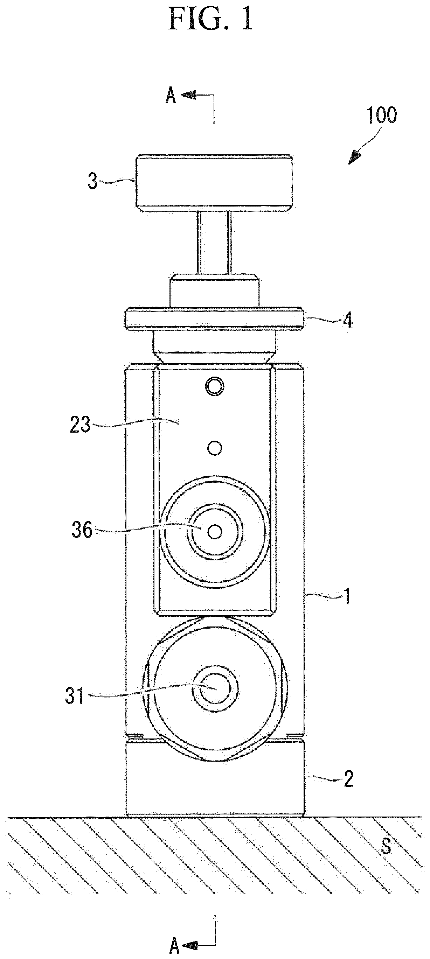

{Fig. 1}
   Fig.1 is an elevational view of a flow regulating apparatus of a first embodiment.
{Fig. 2}
   Fig. 2 is a back view of the flow regulating apparatus of the first embodiment.
{Fig. 3}
   Fig. 3 is an arrow sectional view taken along a line A-A in a fully closed state of the flow regulating apparatus shown in Fig. 1.
{Fig. 4}
   Fig. 4 is an arrow sectional view taken along the line A-A in a fully opened state of the flow regulating apparatus shown in Fig. 1.
{Fig. 5}
   Fig. 5 is a main part enlarged view of the flow regulating apparatus shown in Fig. 3.
{Fig. 6}
   Fig. 6 is a main part enlarged view of the flow regulating apparatus shown in Fig. 4.
{Fig. 7}
   Fig. 7 is a longitudinal sectional view in a fully closed state of a flow regulating apparatus of a second embodiment.
{Fig. 8}
   Fig. 8 is a longitudinal sectional view in a fully opened state of the flow regulating apparatus of the second embodiment.
{Fig. 9}
   Fig. 9 is a main part enlarged view of the flow regulating apparatus shown in Fig. 7.
{Fig. 10}
   Fig. 10 is a main part enlarged view of the flow regulating apparatus shown in Fig. 8.

### {Description of Embodiments}

### <First embodiment>

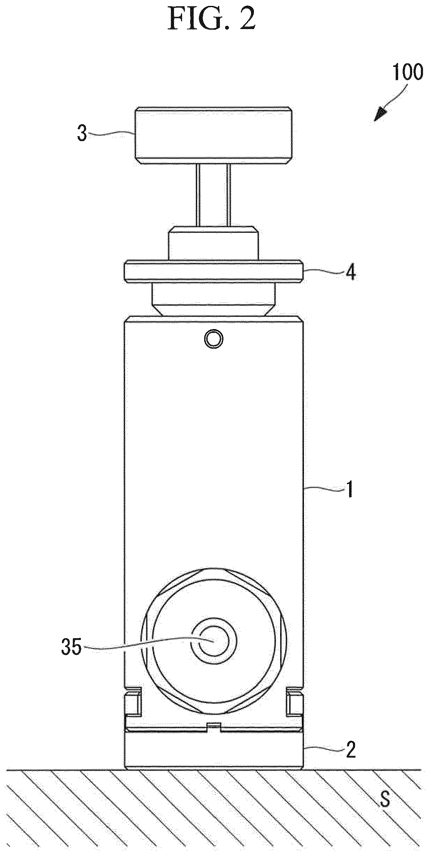

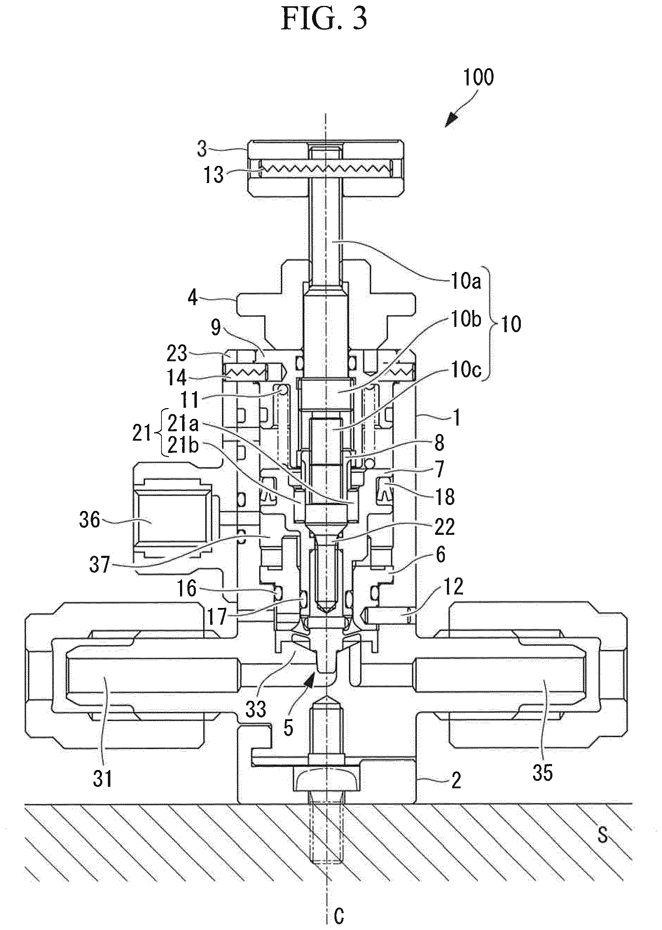

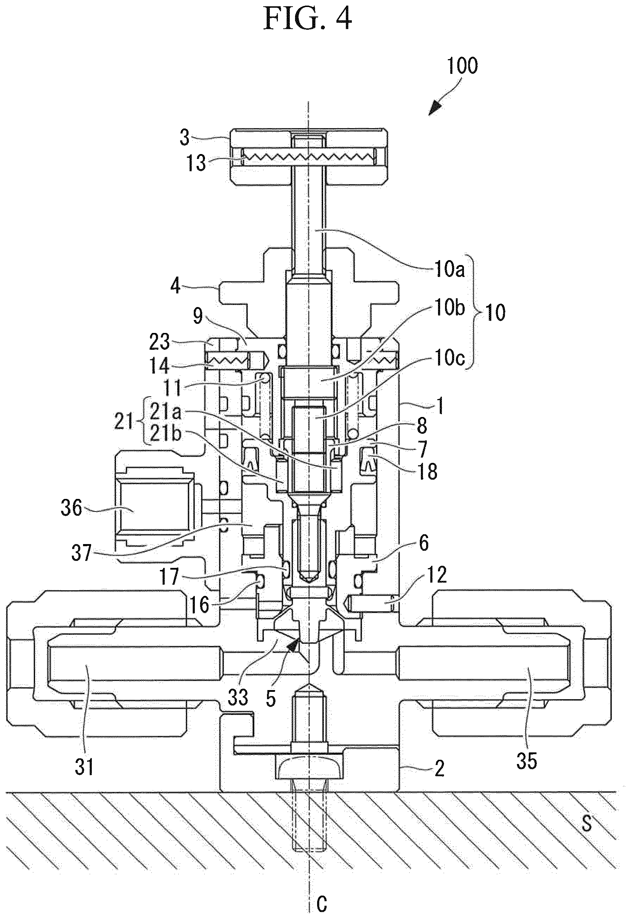

Hereinafter, a flow regulating apparatus 100 of a first embodiment of the present disclosure will be explained based on drawings. Fig. 1 is an elevational view of the flow regulating apparatus 100 of the first embodiment. Fig. 2 is a back view of the flow regulating apparatus 100 of the first embodiment. Fig. 3 is an arrow sectional view taken along a line A-A in a fully closed state of the flow regulating apparatus 100 shown in Fig. 1. Fig. 4 is an arrow sectional view taken along the line A-A in a fully opened state of the flow regulating apparatus 100 shown in Fig. 1.

The flow regulating apparatus 100 shown in Fig. 1 is a device installed at a piping passage of fluids (a chemical liquid, pure water, etc.) used for a semiconductor manufacturing apparatus etc. The flow regulating apparatus 100 includes: a body 1 (a body part); a base part 2; a knob part 3; and a lock nut 4. A front body 23 including an operation port 36 is coupled to the body 1. An inflow passage 31 is the passage that guides a fluid flowing in from an upstream pipe (not shown) of an outside of the flow regulating apparatus 100 to an inside of the flow regulating apparatus 100.

As shown in Fig. 2, an outflow passage 35 for guiding the fluid inside the flow regulating apparatus 100 to a downstream pipe (not shown) is provided at a back surface of the flow regulating apparatus 100.

As shown in Figs. 1 and 2, the flow regulating apparatus 100 is installed on an installation surface S. The base part 2 is fixed to the installation surface S, and the body 1 is removable from the base part 2.

Next, an internal structure of the flow regulating apparatus 100 will be explained using Figs. 3 and 4.

In Fig. 3, shown is the arrow partial sectional view taken along the line A-A in a case where the flow regulating apparatus 100 shown in Fig. 1 is made into the fully closed state. In Fig. 4, shown is the arrow partial sectional view taken along the line A-A in a case where the flow regulating apparatus 100 shown in Fig. 1 is made into the fully opened state. The flow regulating apparatus 100 of the first embodiment is a normal close type air pressure operation valve that becomes a closed state when a compressed air is not supplied to a pressure chamber 37 through the operation port 36.

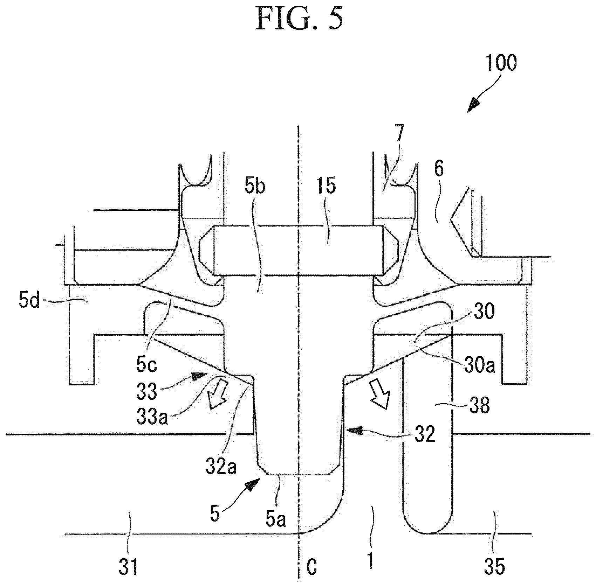

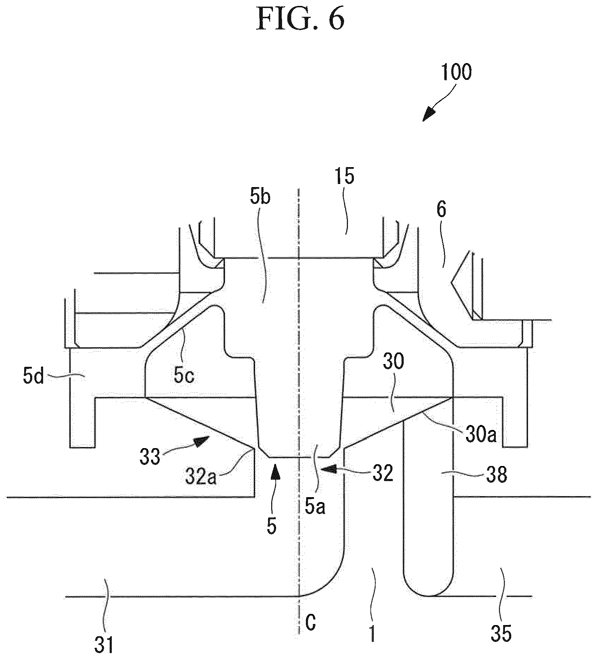

The body 1 shown in Figs. 3 and 4 is a member made of resin to store a flow rate regulation mechanism (a flow rate regulation part) that moves a diaphragm needle 5 (the valve body part) in a vertical direction to bring into contact with or separate from a valve seat part 33. Here, the flow rate regulation mechanism means a mechanism that includes: a piston part 7; a movable body 8; a cover part 9; a screw rod 10, and a spring 11, which will be mentioned later. The flow rate regulation mechanism regulates an insertion amount of a needle part 5a (refer to Figs. 5 and 6) into a valve hole 32 (refer to Figs. 5 and 6) to thereby regulate a flow rate of a fluid that flows into a valve chamber 30 (refer to Figs. 5 and 6) from the valve hole 32.

A diaphragm part 5c (refer to Figs. 5 and 6) is provided at the diaphragm needle 5, and a passage of the fluid is isolated from the other portion by the diaphragm part 5c. As shown in Fig. 3, in a state where the diaphragm needle 5 is brought into contact with the valve seat part 33 by the flow rate regulation mechanism, the flow regulating apparatus 100 becomes the closed state where the fluid having flowed in from the inflow passage 31 does not flow through the outflow passage 35. Meanwhile, as shown in Fig. 4, in a state where the diaphragm needle 5 is separated from the valve seat part 33 by the flow rate regulation mechanism, the flow regulating apparatus 100 becomes an opened state where the fluid having flowed in from the inflow passage 31 flows through the outflow passage 35. In this opened state, the fluid flowing into the outflow passage 35 flows out to the downstream pipe (not shown).

The diaphragm needle 5 is fastened to the piston part 7 by a fastening screw 22, and vertically moves integrally with the piston part 7 in a center axis C direction of the diaphragm needle 5. The body 1 (body part) is a member made of resin (for example, made of PTFE (polytetrafluoroethylene)) inside which the inflow passage 31 and the outflow passage 35 is formed, and includes a cylindrical portion for storing the piston part 7. A diaphragm support part 6 is fixed to an inner surface of the cylindrical portion of the body 1. The diaphragm support part 6 is a member that makes the piston part 7 movable in the center axis C direction. A diameter of an inner peripheral surface of the diaphragm support part 6 is substantially the same as that of an outer peripheral surface of the piston part 7.

A diameter of an outer peripheral surface of the diaphragm support part 6 is substantially the same as that of an inner peripheral surface of the body 1. The diaphragm support part 6 is press-fitted in the body 1 after the diaphragm needle 5 is inserted in the body 1, and thereby the diaphragm needle 5 is fixed to the body 1. A rotation-stop pin 12 is inserted after the diaphragm needle 5 is fixed to the body 1, and thereby rotation of the diaphragm support part 6 around a center axis C with respect to the body 1 is prevented.

O-rings 16 are provided at the outer peripheral surface of the diaphragm support part 6. O-rings 17 and packings 18 are provided at the outer peripheral surface of the piston part 7. The O-rings 16 and 17, and the packings 18 also include a function to prevent a corrosive gas from entering the flow rate regulation mechanism in addition to a usual sealing function. The corrosive gas is generated by the following manner: the compressed air supplied to the pressure chamber 37 is sealed; and a part of chemical liquids, such as hydrofluoric acid and nitric acid, permeates the diaphragm part 5c of the diaphragm needle 5.

By the spring 11, given to the piston part 7 is a biasing force in a direction where the piston part 7 is pressed against an installation surface S side along the center axis C. A compressed air is supplied to the operation port 36 from an external air supply source (not shown). The compressed air having flowed in from the operation port 36 is supplied to the pressure chamber 37 defined by the piston part 7, the diaphragm support part 6, and the body 1.

An air pressure generated by the air supplied to the pressure chamber 37 is regulated by the air supply source (not shown). When an upward force that the air pressure of the pressure chamber 37 gives to the piston part 7 is smaller than a downward force that the biasing force of the spring 11 gives to the piston part 7, as shown in Fig. 3, the flow regulating apparatus 100 becomes the closed state where the diaphragm needle 5 is in contact with the valve seat part 33.

The air pressure of the pressure chamber 37 acts on the piston part 7, and gives the piston part 7 a biasing force in a direction of moving the piston part 7 away from the installation surface S along the center axis C. When the air pressure of the pressure chamber 37 increases, and the biasing force in the direction of moving the piston part 7 away from the installation surface S along the center axis C exceeds the biasing force given by the spring 11, the piston part 7 moves in the direction getting away from the installation surface S along the center axis C. By this movement, the diaphragm needle 5 becomes a state of being separated from the valve seat part 33, and the flow regulating apparatus 100 becomes the opened state where the fluid having flowed in from the inflow passage 31 flows through the outflow passage 35.

Next, will be explained regulation of an opening of the diaphragm needle 5 in a case where the flow regulating apparatus 100 becomes the fully opened state shown in Fig. 4. When the flow regulating apparatus 100 becomes the fully opened state shown in Fig. 4, an upper surface of a concave part provided in a center of the piston part 7 (an upper surface of the fastening screw 22) and a lower surface of the movable body 8 come into contact with each other. Accordingly, depending on a position of the lower surface of the movable body 8, decided is the opening of the diaphragm needle 5 in the case where the flow regulating apparatus 100 becomes the fully opened state shown in Fig. 4. In the embodiment, the opening of the diaphragm needle 5 in the case where the flow regulating apparatus 100 becomes the fully opened state is regulated by regulating the position of the lower surface of the movable body 8.

The movable body 8 is a cylindrical member arranged coaxially with the diaphragm needle 5, and a female screw part is provided at an inner peripheral surface of the movable body 8. At two points of an outer peripheral surface of the movable body 8, formed is a concave groove part that extends in a direction parallel to the center axis C and has a semicircular shape in a sectional view in a direction perpendicular to the center axis C. Parallel pins 21a and 21b (a parallel pin 21) are (is) arranged at the two concave groove parts, respectively in a state of being in contact with each other.

At two points of an inner peripheral surface of the concave part provided in the center of the piston part 7, a concave groove part that extends in the direction parallel to the center axis C and has a semicircular shape in the sectional view in the direction perpendicular to the center axis C. The parallel pins 21a and 21b are arranged at the two concave groove parts, respectively in a state of being in contact with each other. The piston part 7 and the movable body 8 do not rotate relatively around the center axis C by the parallel pins 21a and 21b.

A second male screw part 10c of the screw rod 10 is fastened to the female screw part provided at the inner peripheral surface of the movable body 8. The screw rod 10 includes a first male screw part 10b and a rod body 10a in addition to the second male screw part 10c that is fastened to the movable body 8.

A through hole in the direction perpendicular to the center axis C is provided at an upper end of the rod body 10a. The knob part 3 is fixed to the upper end of the rod body 10a through a spring roll pin 13 inserted in the through hole. The screw rod 10 rotates around the center axis C by rotating the knob part 3 around the center axis C.

The first male screw part 10b of the screw rod 10 is fastened to the female screw part provided at an inner peripheral surface of the cover part 9. The cover part 9 is a cylindrical member arranged coaxially with the diaphragm needle 5, and it is arranged in a state where an outer peripheral surface thereof is in contact with the inner peripheral surface of the body 1. The cover part 9 is fixed to the body 1 by a spring roll pin 14 so as not to rotate around the center axis C.

Next, will be explained change of a position of the movable body 8 in a case where the knob part 3 is rotated once.

The knob part 3 is, as mentioned above, fixed to the screw rod 10. Accordingly, when the knob part 3 is rotated once, the screw rod 10 rotates once. When the screw rod 10 rotates once, the first male screw part 10b and the second male screw part 10c also rotate once, respectively. Here, pitches of the first male screw part 10b and the second male screw part 10c (distances that the first male screw part 10b and the second male screw part 10c move in an axial direction during one rotation) are A and B, respectively, and a relation of A>B is established.

When the knob part 3 is rotated once so that the first male screw part 10b moves in a downward direction along the center axis C, the first male screw part 10b moves in the downward direction along the center axis C by the distance A. In this case, since the second male screw part 10c is a member integrated with the male screw part 10b, it moves in the downward direction along the center axis C by the distance A similarly to the male screw part 10b.

In the second male screw part 10c moving in the downward direction along the center axis C by the distance A, the movable body 8 moves in the downward direction along the center axis C by a distance (A-B) of a difference between the pitch A of the first male screw part 10b and the pitch B of the second male screw part 10c. It is because the pitch B of the second male screw part 10c is smaller than the pitch A of the first male screw part 10b, and the movable body 8 does not rotate around the center axis C with respect to the piston part 7 by the parallel pin 21 that the movable body 8 moves in the downward direction by the distance (A-B) as described above.

Similarly, when the knob part 3 is rotated once so that the first male screw part 10b moves in an upward direction along the center axis C, the first male screw part 10b moves in the upward direction along the center axis C by the distance A. In this case, since the second male screw part 10c is the member integrated with the male screw part 10b, it moves in the upward direction along the center axis C by the distance A similarly to the male screw part 10b.

In the second male screw part 10c moving in the upward direction along the center axis C by the distance A, the movable body 8 moves in the upward direction along the center axis C by the distance (A-B) of the difference between the pitch A of the first male screw part 10b and the pitch B of the second male screw part 10c. It is because the pitch B of the second male screw part 10c is smaller than the pitch A of the first male screw part 10b, and the movable body 8 does not rotate around the center axis C with respect to the piston part 7 by the parallel pin 21 that the movable body 8 moves in the upward direction by the distance (A-B) as described above.

As described above, the first male screw part 10b and the second male screw part 10c whose pitches are different from each other are provided at the screw rod 10, thereby a movement amount of the movable body 8 with respect to the rotation of the knob part 3 is reduced, and fine regulation of the movement amount of the movable body 8 can be performed. Additionally, the knob part 3 is rotated to regulate the position of the movable body 8, thereby a movement range of the piston part 7 is decided, and the opening of the diaphragm needle 5 in the case of being the fully opened state is regulated.

After the position of the movable body 8 is regulated by rotating the knob part 3, the lock nut 4 is fastened to fix the position of the movable body 8. The lock nut 4 includes the female screw part that is fastened to the male screw part provided at an outer peripheral surface of the rod body 10a. The lock nut 4 is rotated and is moved downward in the center axis C direction (a direction approaching the cover part 9), and thereby a lower surface of the lock nut 4 and an upper surface of the cover part 9 come into contact with each other. When the lower surface of the lock nut 4 and the upper surface of the cover part 9 come into contact with each other, the knob part 3 is fixed so as not to rotate around the center axis C.

Next, a peripheral structure of the diaphragm needle 5 and the valve seat part 33 will be explained using Figs. 5 and 6.

Fig. 5 is a main part enlarged view of the flow regulating apparatus 100 shown in Fig. 3, and it is the view showing a periphery of the diaphragm needle 5 in the fully closed state. Fig. 6 is a main part enlarged view of the flow regulating apparatus 100 shown in Fig. 4, and it is the view showing the periphery of the diaphragm needle 5 in the fully opened state.

As shown in Figs. 5 and 6, the diaphragm needle 5 includes: the needle part 5a (a projecting part); a base 5b; the diaphragm part 5c; and an annular edge 5d. The needle part 5a is a projection-like member provided at a tip of the diaphragm needle 5, and can be inserted in the valve hole 32 provided in the body 1. The needle part 5a is moved in the center axis C direction, a gap (distance) between an outer peripheral surface of the needle part 5a and an inner peripheral surface of the valve hole 32 is regulated, and thereby a flow rate of the fluid that flows into the valve chamber 30 from the inflow passage 31 is regulated. The needle part 5a is molded integrally with the base 5b. The valve hole 32 makes the inflow passage 31 and the valve chamber 30 communicate with each other.

The needle part 5a and the diaphragm part 5c are coupled to the base 5b. The diaphragm part 5c is an annular thin film member in a planar view that is coupled to an outer peripheral surface of the base 5b. An inner peripheral side edge of the diaphragm part 5c is coupled to the outer peripheral surface of the base 5b, and an outer peripheral side edge of the diaphragm part 5c is coupled to the annular edge 5d. The diaphragm part 5c is the member that deforms according to the needle part 5a and the base 5b moving in the center axis C direction.

The annular edge 5d is an annular member in the planar view. A projecting part that extends in a peripheral direction is provided under an outer peripheral side edge of the annular edge 5d, and it is inserted in an annular groove part in the planar view that is provided in the body 1. In addition, an upper surface of the outer peripheral side edge of the annular edge 5d is in a state of being in contact with the diaphragm support part 6. The annular edge 5d is fixed to the body 1 by pressing the upper surface of the outer peripheral side edge of the annular edge 5d by means of the diaphragm support part 6.

A through hole is provided in the base 5b of the diaphragm needle 5 in the direction perpendicular to the center axis C. A cylindrical diaphragm pin 15 is inserted in the through hole. Both ends of the diaphragm pin 15 are arranged so as to engage with a substantially U-shaped groove in the sectional view that is provided in the piston part 7. The base 5b and the piston part 7 are fixed by the diaphragm pin 15 so as not to rotate relatively around the center axis C.

The valve chamber 30 is formed in a circular shape in the planar view along the center axis C, and the diaphragm needle 5 including the needle part 5a and the base 5b is housed therein. The valve chamber 30 is a space defined by a fluid contact surface of the diaphragm needle 5, and the valve seat part 33, which is a fluid contact surface of the body 1. A center axis of the valve chamber 30 coincides with the center axis C of the diaphragm needle 5.

The valve seat part 33 is formed in a taper shape in which a distance from the center axis C gradually becomes longer at a constant inclination as it gets away from the valve hole 32 along the center axis C direction of the valve chamber 30. One end of the valve seat part 33 is connected to a valve hole edge 32a, which is an end of the valve hole 32, and the other end of the valve seat part 33 is connected to the annular edge 5d and the diaphragm part 5c of the diaphragm needle 5.

The flow regulating apparatus 100 becomes a blocking state where inflow of the fluid from the valve hole 32 to the valve chamber 30 is blocked in the state shown in Fig. 3. In this blocking state, a contact position 33a where the diaphragm needle 5 and the valve seat part 33 come into contact with each other is separated from the valve hole edge 32a that serves as a boundary of the valve hole 32 and the valve seat part 33. In addition, in this blocking state, the flow regulating apparatus 100 is in a state where a minute gap is provided between the valve hole edge 32a and the outer peripheral surface of the needle part 5a.

As described above, since the valve hole edge 32a does not come into contact with the diaphragm needle 5 in the blocking state of the flow regulating apparatus 100, deformation of the valve hole 32 due to contact of the diaphragm needle 5 is suppressed. In addition, in this blocking state, the contact position 33a where the diaphragm needle 5 and the valve seat part 33 come into contact with each other is separated from the valve hole edge 32a. Accordingly, a stress generated at the valve seat part 33 in the contact position 33a is prevented from being transmitted to the valve hole edge 32a directly and at a shortest distance, and failure in which the valve hole 32 deforms is suppressed.

Here, in the blocking state, directions of a pressing force that the valve seat part 33 receives from the base 5b in the contact position 33a correspond to normal line directions (directions shown by arrows in Fig. 5) perpendicular to a taper-shaped surface of the valve seat part 33. Accordingly, transmission directions of the stress generated at the valve seat part 33 in the contact position 33a correspond to directions getting away from the valve hole 32. Consequently, the stress generated at the valve seat part 33 due to the pressing force received from the base 5b becomes hard to be transmitted to the valve hole edge 32a, and failure in which the valve hole 32 deforms is suppressed.

When the air pressure supplied to the pressure chamber 37 is increased from the blocking state shown in Fig. 5, the base 5b of the diaphragm needle 5 is separated from the valve seat part 33. When the base 5b is separated from the valve seat part 33, the fluid flows into the valve chamber 30 from the valve hole 32. The fluid having flowed into the valve chamber 30 flows into an intermediate passage 38 through an opening 30a provided in the valve chamber 30. The fluid having flowed into the intermediate passage 38 flows out to an outside of the flow regulating apparatus 100 via the outflow passage 35.

Since the valve seat part 33 is formed in the taper shape, the fluid having flowed into the valve chamber 30 from the valve hole 32 smoothly moves toward the opening 30a from the valve hole edge 32a. Therefore, suppressed are retaining of the fluid in the valve chamber 30 and accumulation in the valve chamber 30 of particles etc. contained in the fluid.

As explained above, in the flow regulating apparatus 100 of the embodiment, in the blocking state where inflow of the fluid from the valve hole 32 to the valve chamber 30 is blocked, the contact position 33a where the diaphragm needle 5 and the valve seat part 33 come into contact with each other is separated from the valve hole edge 32a. Accordingly, the stress generated at the valve seat part 33 in the contact position 33a is prevented from being transmitted to the valve hole edge 32a directly and at the shortest distance, and failure in which the valve hole 32 deforms is suppressed.

In addition, the valve seat part 33 is formed in the taper shape in which the distance from the center axis C gradually expands at a constant inclination as it gets away from the valve hole 32 along the center axis C direction of the valve chamber 30. Therefore, the transmission directions of the stress generated at the valve seat part 33 in the contact position 33a correspond to the directions getting away from the valve hole 32, and failure in which the valve hole 32 deforms is suppressed. Furthermore, since the fluid having flowed in from the valve hole 32 smoothly flows along the taper-shaped valve seat part 33, retention of the fluid and accumulation of the particles etc. contained in the fluid are suppressed.

In addition, in the flow regulating apparatus 100 of the embodiment, the diaphragm needle 5 includes the diaphragm part 5c that defines the valve chamber 30 together with the valve seat part 33, the one end of the valve seat part 33 is connected to the valve hole edge 32a, and the other end thereof is connected to the diaphragm part 5c.

By configuring the flow regulating apparatus 100 as described above, the fluid having flowed into the valve chamber 30 from the valve hole edge 32a connected to the one end of the valve seat part 33 is smoothly guided by the taper-shaped valve seat part 33 in which the distance from the center axis C gradually expands at a constant inclination until it reaches the diaphragm part 5c, which is the other end of the valve seat part 33. Accordingly, retention of the fluid and accumulation of the particles etc. contained in the fluid can be suppressed more reliably.

### <Second embodiment>

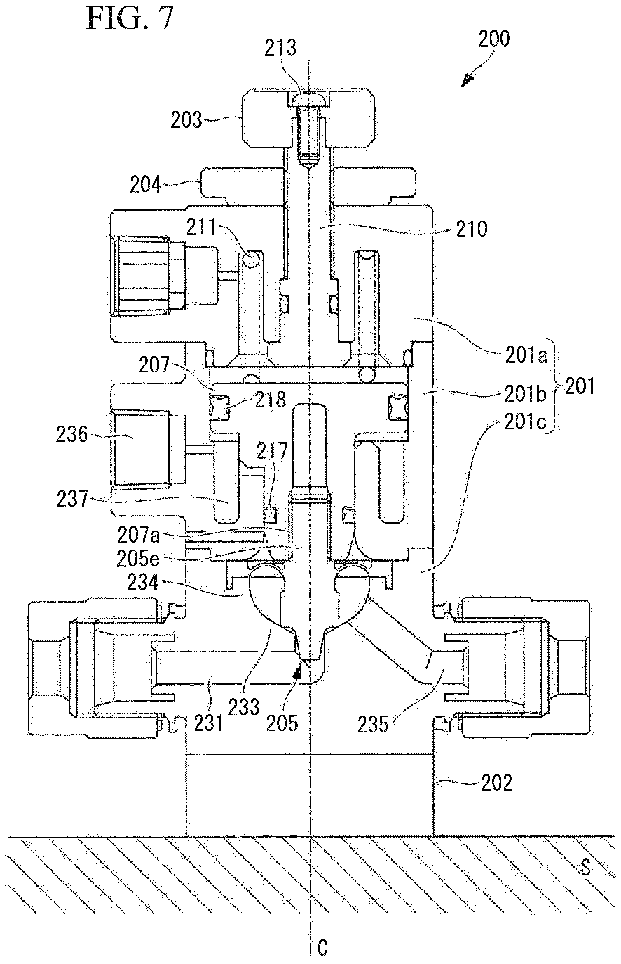

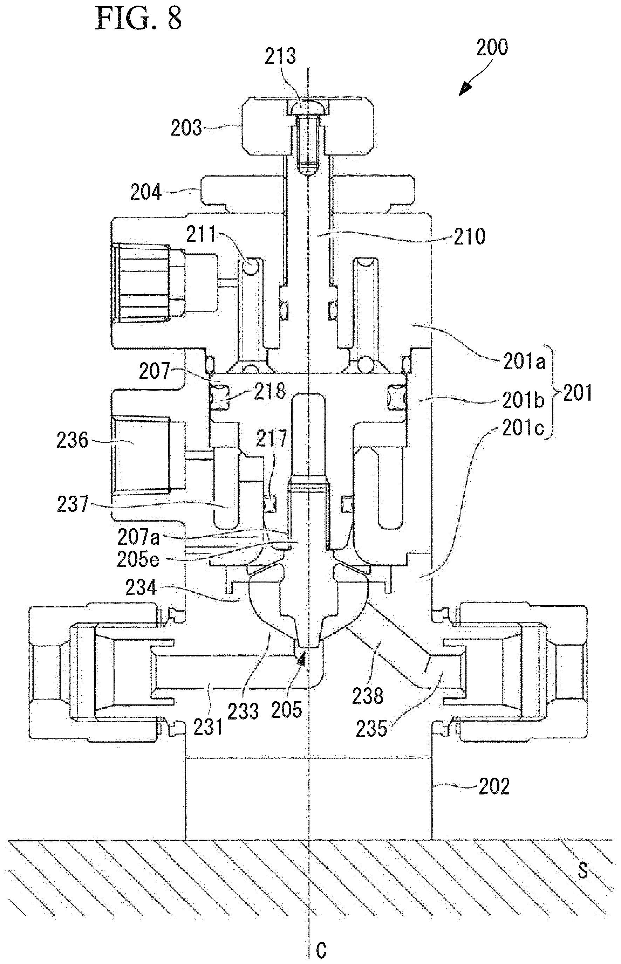

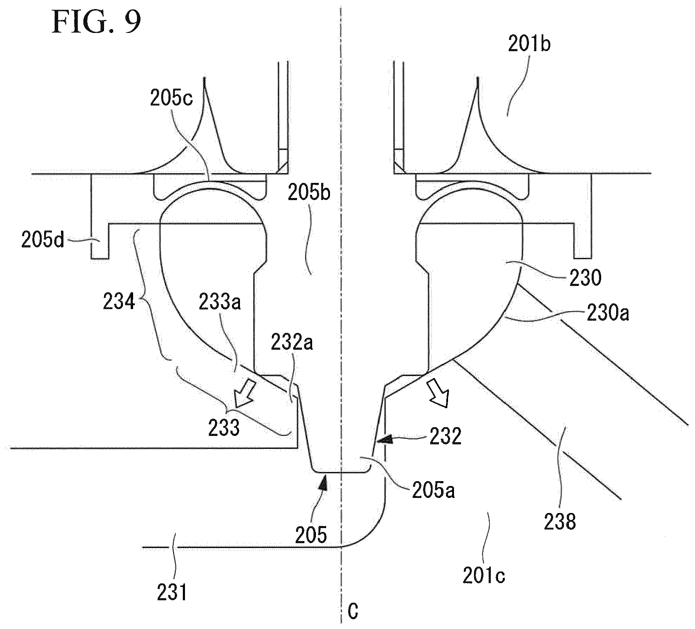

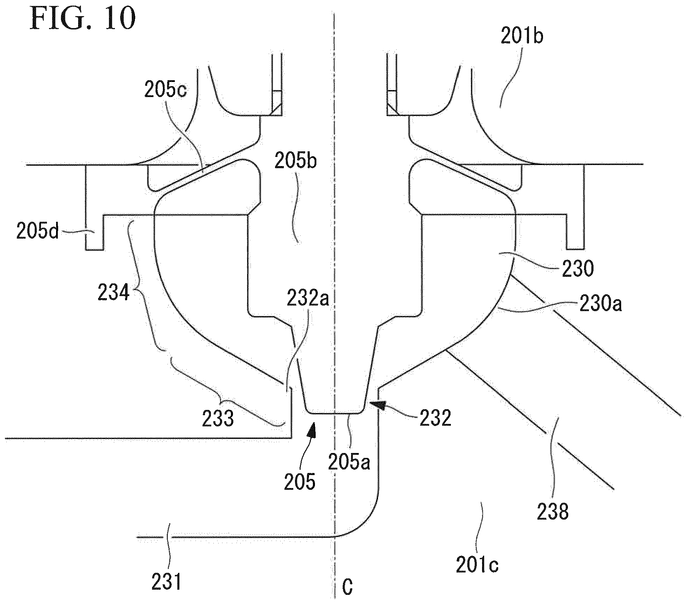

Hereinafter, a flow regulating apparatus of a second embodiment of the present disclosure will be explained based on the drawings. Fig. 7 is a longitudinal sectional view in a fully opened state of a flow regulating apparatus 200 of the second embodiment. Fig. 8 is a longitudinal sectional view in a fully closed state of the flow regulating apparatus 200 of the second embodiment. Fig. 9 is a main part enlarged view of the flow regulating apparatus 200 shown in Fig. 7. Fig. 10 is a main part enlarged view of the flow regulating apparatus 200 shown in Fig. 8.

The flow regulating apparatus 200 shown in Fig. 7 is a device installed at a piping passage of fluids such as a chemical liquid used by a semiconductor manufacturing apparatus. The flow regulating apparatus 200 includes: a body 201 (a body part); a base part 202; a knob part 203; and a lock nut 204. The body 201 includes: a first body part 201a; a second body part 201b; and a third body part 201c. An inflow passage 231 is the passage that guides a fluid flowing in from an upstream pipe (not shown) of an outside of the flow regulating apparatus 200 to an inside of the flow regulating apparatus 200.

Next, an internal structure of the flow regulating apparatus 200 will be explained.

The flow regulating apparatus 200 of the second embodiment is a normal close type air pressure operation valve that becomes a closed state when a compressed air is not supplied to a pressure chamber 237 through an operation port 236.

The body 201 shown in Figs. 7 and 8 is a member made of resin (for example, PTFE (polytetrafluoroethylene)) to store a flow rate regulation mechanism (a flow rate regulation part) that moves a diaphragm needle 205 (a valve body part) in a vertical direction to bring into contact with or separate from a valve seat part 233. Here, the flow rate regulation mechanism means a mechanism that includes: a piston part 207; a screw rod 210, and a spring 211, which will be mentioned later. The flow rate regulation mechanism regulates an insertion amount of the needle part 205a into a valve hole 232, which will be mentioned later, to thereby regulate a flow rate of a fluid that flows into a valve chamber 230, which will be mentioned later, from the valve hole 232.

The diaphragm part 205c, which will be mentioned later, is provided at the diaphragm needle 205, and a passage of the fluid is isolated from the other portion by the diaphragm part 205c. As shown in Fig. 7, in a state where the diaphragm needle 205 is brought into contact with the valve seat part 233 by the flow rate regulation mechanism, the flow regulating apparatus 200 becomes the closed state where the fluid having flowed in from the inflow passage 231 does not flow through an outflow passage 235. Meanwhile, as shown in Fig. 8, in a state where the diaphragm needle 205 is separated from the valve seat part 233 by the flow rate regulation mechanism, the flow regulating apparatus 200 becomes an opened state where the fluid having flowed in from the inflow passage 231 flows through the outflow passage 235. In the opened state, the fluid flowing into the outflow passage 235 flows out to a downstream pipe (not shown).

A male screw part 205e provided at the diaphragm needle 205 is fastened to a female screw part 207a provided at the piston part 207. Accordingly, the diaphragm needle 205 and the piston part 207 vertically move integrally in the center axis C direction. The third body part 201c is a member made of resin inside which the inflow passage 231 and the outflow passage 235 is formed. The second body part 201b is fixed to an upper part of the third body part 201c.

The second body part 201b is a member that makes the piston part 207 movable in the center axis C direction. A diameter of an inner peripheral surface of the second body part 201b is substantially the same as that of an outer peripheral surface of the piston part 207. The second body part 201b is fixed to the third body part 201c after the diaphragm needle 205 is inserted in the third body part 201c, and thereby the diaphragm needle 205 is fixed to the third body part 201c.

X-rings 217 and 218 are provided at the outer peripheral surface of the piston part 207. The X-rings 217 and 218 include a function to prevent a corrosive gas from entering the flow rate regulation mechanism in addition to a usual sealing function. The corrosive gas is generated by the following manner: the compressed air supplied to the pressure chamber 237 is sealed; and also a part of chemical liquids, such as hydrofluoric acid and nitric acid, permeates the diaphragm part 205c of the diaphragm needle 205.

By the spring 211, given to the piston part 207 is a biasing force in a direction where the piston part 207 is pressed against the installation surface S side along the center axis C. A compressed air is supplied to the operation port 236 from an external air supply source (not shown). The compressed air having flowed in from the operation port 236 is supplied to the pressure chamber 237 defined by the piston part 207 and the second body part 201b.

An air pressure generated by the air supplied to the pressure chamber 237 is regulated by the air supply source (not shown). When an upward force that the air pressure of the pressure chamber 237 gives to the piston part 207 is smaller than a downward force that the biasing force of the spring 211 gives to the piston part 207, as shown in Fig. 7, the flow regulating apparatus 200 becomes the closed state where the diaphragm needle 205 is in contact with the valve seat part 233.

The air pressure of the pressure chamber 237 acts on the piston part 207, and gives the piston part 207 a biasing force in a direction of moving the piston part 207 away from the installation surface S along the center axis C. When the air pressure of the pressure chamber 237 increases, and the biasing force in the direction of moving the piston part 207 away from the installation surface S along the center axis C exceeds the biasing force given by the spring 211, the piston part 207 moves in the direction getting away from the installation surface S along the center axis C. By this movement, the diaphragm needle 205 becomes a state of being separated from the valve seat part 233, and the flow regulating apparatus 200 becomes the opened state where the fluid having flowed in from the inflow passage 231 flows through the outflow passage 235.

Next, will be explained regulation of an opening of the diaphragm needle 205 in a case where the flow regulating apparatus 200 becomes the fully opened state shown in Fig. 8. When the flow regulating apparatus 200 becomes the fully opened state shown in Fig. 8, an upper surface of the piston part 207 and a lower surface of the screw rod 210 come into contact with each other. Accordingly, depending on a position of the lower surface of the screw rod 210, decided is the opening of the diaphragm needle 205 in the case where the flow regulating apparatus 200 becomes the fully opened state shown in Fig. 8. In the embodiment, the opening of the diaphragm needle 205 in the case where the flow regulating apparatus 200 becomes the fully opened state is regulated by regulating the position of the lower surface of the screw rod 210.

A female screw part that extends in the center axis C direction is provided at an upper end of the screw rod 210. The knob part 203 is fixed to the screw rod 210 by fastening a fastening screw 213 to the female screw part. Accordingly, the screw rod 210 rotates around the center axis C by rotating the knob part 203 around the center axis C. A male screw part is provided at an outer peripheral surface of the screw rod 210, and is fastened to a female screw part provided at the first body part 201a. When the knob part 203 is rotated around the center axis C, the screw rod 210 vertically moves along the center axis C direction.

After the position of the lower surface of the screw rod 210 is regulated by rotating the knob part 203, the lock nut 204 is fastened to thereby fix a position of the screw rod 210. The lock nut 204 includes a female screw part that is fastened to a male screw part provided at the outer peripheral surface of the screw rod 210. The lock nut 204 is rotated and is moved downward in the center axis C direction (a direction approaching the first body part 201a), and thereby a lower surface of the lock nut 204 and an upper surface of the first body part 201a come into contact with each other. When the lower surface of the lock nut 204 and the upper surface of the first body part 201a come into contact with each other, the knob part 203 is fixed so as not to rotate around the center axis C.

Next, a peripheral structure of the diaphragm needle 205 and the valve seat part 233 will be explained using Figs. 9 and 10.

Fig. 9 is a main part enlarged view of the flow regulating apparatus 200 shown in Fig. 7, and it is the view showing a periphery of the diaphragm needle 205 in the fully closed state. Fig. 10 is a main part enlarged view of the flow regulating apparatus 200 shown in Fig. 8, and it is the view showing the periphery of the diaphragm needle 205 in the fully opened state.

As shown in Figs. 9 and 10, the diaphragm needle 205 includes: the needle part 205a (a projecting portion); a base 205b; the diaphragm part 205c; and an annular edge 205d. The needle part 205a is a projection-like member provided at a tip of the diaphragm needle 205, and can be inserted in the valve hole 232 provided in the third body part 201c.

The needle part 205a is moved in the center axis C direction, a distance between an outer peripheral surface of the needle part 205a and an inner peripheral surface of the valve hole 232 is regulated, and thereby a flow rate of the fluid that flows into the valve chamber 230 from the inflow passage 231 is regulated. The needle part 205a is molded integrally with the base 205b. The valve hole 232 makes the inflow passage 231 and the valve chamber 230 communicate with each other.

The needle part 205a and the diaphragm part 205c are coupled to the base 205b. The diaphragm part 205c is an annular thin film member in a planar view that is coupled to an outer peripheral surface of the base 205b. An inner peripheral side edge of the diaphragm part 205c is coupled to the outer peripheral surface of the base 205b, and an outer peripheral side edge of the diaphragm part 205c is coupled to the annular edge 205d. The diaphragm part 205c is the member that deforms according to the needle part 205a and the base 205b moving in the center axis C direction.

The annular edge 205d is an annular member in the planar view. A projecting part is provided under an outer peripheral side edge of the annular edge 205d, and it is inserted in an annular groove part in the planar view that is provided in the third body part 201c. In addition, an upper surface of the outer peripheral side edge of the annular edge 205d is in a state of being in contact with the second body part 201b. The annular edge 205d is fixed to the third body part 201c by pressing the upper surface of the outer peripheral side edge of the annular edge 205d by means of the second body part 201b.

The valve chamber 230 is formed in a circular shape in the planar view along the center axis C, and the diaphragm needle 205 including the needle part 205a and the base 205b is housed therein. The valve chamber 230 is a space defined by a fluid contact surface of the diaphragm needle 205, and the valve seat part 233 and a connection part 234, which correspond to a fluid contact surface of the third body part 201c. A center axis of the valve chamber 230 coincides with the center axis C of the diaphragm needle 205.

The valve seat part 233 is formed in a taper shape in which a distance from the center axis C gradually becomes longer at a constant inclination as it gets away from the valve hole 232 along the center axis C direction of the valve chamber 230. One end of the valve seat part 233 is connected to a valve hole edge 232a, which is an end of the valve hole 232, and the other end of the valve seat part 233 is connected to the connection part 234.

The connection part 234 connects the valve seat part 233 and the annular edge 205d of the diaphragm needle 205. One end of the connection part 234 is connected to the valve seat part 233, and the other end of the connection part 234 is connected to the annular edge 205d of the diaphragm needle 205.

As shown in Figs. 9 and 10, the connection part 234 is formed in a circular arc shape in a sectional view in a direction parallel to the center axis C.

The flow regulating apparatus 200 becomes a blocking state where inflow of the fluid from the valve hole 232 to the valve chamber 230 is blocked in the state shown in Fig. 9. In this blocking state, a contact position 233a where the diaphragm needle 205 and the valve seat part 233 come into contact with each other is separated from the valve hole edge 232a that serves as a boundary of the valve hole 232 and the valve seat part 233. In addition, in this blocking state, the flow regulating apparatus 200 is in a state where a minute gap is provided between the valve hole edge 232a and the outer peripheral surface of the needle part 205a.

As described above, since the valve hole edge 232a does not come into contact with the diaphragm needle 205 in the blocking state of the flow regulating apparatus 200, deformation of the valve hole 232 due to contact of the diaphragm needle 205 is suppressed. In addition, in this blocking state, since the contact position 233a where the diaphragm needle 205 and the valve seat part 233 come into contact with each other is separated from the valve hole edge 232a, deformation of the valve hole 232 is suppressed.

Here, in the blocking state, directions of a pressing force that the valve seat part 233 receives from the base 205b in the contact position 233a correspond to normal line directions (directions shown by arrows in Fig. 9) perpendicular to a taper-shaped surface of the valve seat part 233. Accordingly, transmission directions of a stress generated at the valve seat part 233 in the contact position 233a correspond to directions getting away from the valve hole 232. Consequently, the stress generated at the valve seat part 233 due to the pressing force received from the base 205b becomes hard to be transmitted to the valve hole edge 232a, and failure in which the valve hole 232 deforms is suppressed.

When the air pressure supplied to the pressure chamber 237 is increased from the blocking state shown in Fig. 9, the base 205b of the diaphragm needle 205 is separated from the valve seat part 233. When the base 205b is separated from the valve seat part 233, the fluid flows into the valve chamber 230 from the valve hole 232. The fluid having flowed into the valve chamber 230 flows into an intermediate passage 238 through an opening 230a provided in the valve chamber 230. The fluid having flowed into the intermediate passage 238 flows out to an outside of the flow regulating apparatus 200 via the outflow passage 235.

Since the valve seat part 233 is formed in the taper shape, and the connection part 234 is formed in the circular arc shape, the fluid having flowed in the valve chamber 230 from the valve hole 232 smoothly moves toward the opening 230a from the valve hole edge 232a.

Therefore, suppressed are retaining of the fluid in the valve chamber 230 and accumulation in the valve chamber 230 of particles etc. contained in the fluid.

As explained above, in the flow regulating apparatus 200 of the embodiment, in the blocking state where inflow of the fluid from the valve hole 232 to the valve chamber 230 is blocked, the contact position 233a where the diaphragm needle 205 and the valve seat part 233 come into contact with each other is separated from the valve hole edge 232a. Accordingly, the stress generated at the valve seat part 233 in the contact position 233a is prevented from being transmitted to the valve hole edge 232a directly and at a shortest distance, and failure in which the valve hole 232 deforms is suppressed.

In addition, the valve seat part 233 is formed in the taper shape in which the distance from the center axis C gradually expands at a constant inclination as it gets away from the valve hole 232 along the center axis C direction of the valve chamber 230. Therefore, the transmission directions of the stress generated at the valve seat part 233 in the contact position 233a correspond to the directions getting away from the valve hole 232, and failure in which the valve hole 232 deforms is suppressed. Furthermore, since the fluid having flowed in from the valve hole 232 smoothly flows along the taper-shaped valve seat part 233, retention of the fluid and accumulation of particles etc. contained in the fluid are suppressed.

In addition, in the flow regulating apparatus 200 of the embodiment, the diaphragm needle 205 includes the diaphragm part 205c that defines the valve chamber 230 together with the valve seat part 233. In addition, the flow regulating apparatus 200 includes the connection part 234 that connects the valve seat part 233 and the diaphragm part 205c, and the connection part 234 is formed in the circular arc shape in the sectional view in the direction parallel to the center axis C.

By configuring the flow regulating apparatus 200 as described above, the fluid is guided along the circular arc-like connection part 234 in the sectional view in the direction parallel to the center axis C, and thus retention of the fluid and accumulation of the particles etc. contained in the fluid can be suppressed more reliably.

### <Other embodiment>

Although a fluid device unit is set as the normal close type air pressure operation valve in the first and second embodiments, an other aspect may be employed. For example, a normal open type air pressure operation valve may be employed. An other type of fluid device unit other than the air pressure operation valve may be employed as long as it includes an inlet and an outlet of a fluid.

In addition to that, the present invention is not limited to the above-mentioned embodiments, and appropriate changes can be made without departing from the scope of the invention.

## Claims

1. A flow regulating apparatus (100) comprising:
a valve body part (5) having a projecting part (5a) provided at a tip thereof;
a circular valve chamber (30) in a planar view in which the valve body part (5) is housed;
an inflow passage (31) through which a fluid from outside flows;
a valve hole (32) in which the projecting part (5a) can be inserted and that makes the inflow passage (31) and the valve chamber (30) communicate with each other;
a flow rate regulation part (7, 8, 9, 10, 11) that regulates an insertion amount of the projecting part (5a) into the valve hole (32) to thereby regulate a flow rate of the fluid that flows into the valve chamber (30) from the valve hole (32); and
a taper-shaped valve seat part (33) in which a distance from a center axis gradually becomes longer at a constant inclination as it gets away from the valve hole (32) along a center axis direction of the valve chamber (30);
**characterised in that**,
in a blocking state where inflow of the fluid from the valve hole (32) to the valve chamber (30) is blocked, the projecting part (5a) is inserted in the valve hole (32) and a gap is provided between an edge (32a) of the valve hole (32) and an outer surface of the projecting part (5a), and **in that** a contact position where the valve body part (5) and the valve seat part (33) come into contact with each other is separated from a valve hole edge (32a) serving as a boundary of the valve hole (32) and the valve seat part (33).

2. The flow regulating apparatus (100) according to Claim 1, wherein
the valve body part (5) includes a diaphragm part (5c) to define the valve chamber (30) together with the valve seat part (33), and wherein
one end of the valve seat part (33) is connected to the valve hole edge (32a), and the other end of the valve seat part (33) is connected to the diaphragm part (5c).

3. The flow regulating apparatus (200) according to Claim 1, wherein
the valve body part (201) includes the diaphragm part (205c) to define the valve chamber (230) together with the valve seat part (233), and
the valve body part (201) includes a connection part (234) to connect the valve seat part (233) and the diaphragm part (205c), and wherein
the connection part (234) is formed in a circular arc shape in a sectional view in a direction parallel to the center axis.

## Patentansprüche

1. Durchflussregulierungsgerät (100), umfassend:
einen Ventilkörperteil (5) mit einem vorspringendem Teil (5a), das an einer Spitze davon vorgesehen ist,
eine in Draufsicht kreisrunde Ventilkammer (30), in der der Ventilkörperteil (5) untergebracht ist,
einen Einströmdurchgang (31), durch den ein Fluid von außen fließt,
eine Ventilöffnung (32), in der der vorspringende Teil (5a) eingesetzt werden kann und die dazu führt, dass der Einströmdurchgang (31) und die Ventilkammer (30) miteinander in Verbindung kommen,
einen Durchflussmengenregulierungsteil (7, 8, 9, 10, 11), der einen Einsetzbetrag des vorspringenden Teils (5a) in die Ventilöffnung (32) reguliert,
um dadurch eine Durchflussmenge des Fluids zu regulieren, das von der Ventilöffnung (32) in die Ventilkammer (30) fließt, und
einen konischen Ventilsitzteil (33), bei dem ein Abstand von einer Mittelachse allmählich länger wird bei konstanter Neigung, sowie er sich von der Ventilöffnung (32) entlang einer Mittelachsenrichtung der Ventilkammer (30) entfernt,
**dadurch gekennzeichnet, dass**
der vorspringende Teil (5a), in einem Blockierungszustand, bei dem das Einströmen des Fluids von der Ventilöffnung (32) zur Ventilkammer (30) blockiert ist, in die Ventilöffnung (32) eingesetzt ist und eine Lücke zwischen einer Kante (32a) der Ventilöffnung (32) und einer Außenfläche des vorspringenden Teils (5a) vorgesehen ist, und dadurch, dass eine Kontaktposition, an der der Ventilkörperteil (5) und der Ventilsitzteil (33) miteinander in Kontakt kommen, von einer als Begrenzung der Ventilöffnung (32) und dem Ventilsitzteil (33) dienenden Ventilöffnungskante (32a) separiert ist.

2. Durchflussregulierungsgerät (100) nach Anspruch 1, wobei
der Ventilkörperteil (5) einen Diaphragma-Teil (5c) enthält, um die Ventilkammer (30) zusammen mit dem Ventilsitzteil (33) zu definieren, und wobei
ein Ende des Ventilsitzteils (33) mit der Ventilöffnungskante (32a) verbunden ist und das andere Ende des Ventilsitzteils (33) mit dem Diaphragma-Teil (5c) verbunden ist.

3. Durchflussregulierungsgerät (200) nach Anspruch 1, wobei
der Ventilkörperteil (201) das Diaphragma-Teil (205c) enthält, um die Ventilkammer (230) zusammen mit dem Ventilsitzteil (233) zu definieren, und
der Ventilkörperteil (201) einen Verbindungsteil (234) enthält, um den Ventilsitzteil (233) mit dem Diaphragma-Teil (205c) zu verbinden, und wobei
der Verbindungsteil (234) in Querschnittansicht in einer Richtung parallel zur Mittelachse in einer Kreisbogenform ausgebildet ist.

## Revendications

1. Appareil de régulation d'écoulement (100) comprenant :
une partie de corps de vanne (5) ayant une partie saillante (5a) fournie à une extrémité de celle-ci ;
une chambre de vanne circulaire (30) dans une vue en plan dans laquelle la partie de corps de vanne (5) est logée ;
un passage d'admission (31) à travers lequel s'écoule un fluide provenant de l'extérieur ;
un trou de vanne (32) dans lequel la partie saillante (5a) peut être insérée et qui fait communiquer le passage d'admission (31) et la chambre de vanne (30) l'un avec l'autre ;
une partie de régulation de débit (7, 8, 9, 10, 11) qui régule une quantité d'insertion de la partie saillante (5a) dans le trou de vanne (32) pour réguler ainsi un débit du fluide qui s'écoule dans la chambre de vanne (30) depuis le trou de vanne (32) ; et
une partie de siège de vanne tronconique (33) dans laquelle une distance depuis un axe central devient progressivement plus longue à une inclinaison constante à mesure qu'elle s'éloigne du trou de vanne (32) le long d'une direction d'axe central de la chambre de vanne (30) ;
**caractérisé en ce que**,
dans un état de blocage dans lequel l'admission du fluide depuis le trou de vanne (32) jusqu'à la chambre de vanne (30) est bloquée, la partie saillante (5a) est insérée dans le trou de vanne (32) et un espace est fourni entre un bord (32a) du trou de vanne (32) et une surface extérieure de la partie saillante (5a), et **en ce qu'**une position de contact où la partie de corps de vanne (5) et la partie de siège de vanne (33) viennent en contact l'une avec l'autre est séparée d'un bord de trou de vanne (32a) servant de limite du trou de vanne (32) et de la partie de siège de vanne (33).

2. Appareil de régulation d'écoulement (100) selon la revendication 1, dans lequel la partie de corps de vanne (5) comprend une partie de diaphragme (5c) pour définir la chambre de vanne (30) avec la partie de siège de vanne (33), et dans lequel
une extrémité de la partie de siège de vanne (33) est connectée au bord de trou de vanne (32a), et l'autre extrémité de la partie de siège de vanne (33) est connectée à la partie de diaphragme (5c).

3. Appareil de régulation d'écoulement (200) selon la revendication 1, dans lequel
la partie de corps de vanne (201) comprend la partie de diaphragme (205c) pour définir la chambre de vanne (230) avec la partie de siège de vanne (233), et
la partie de corps de vanne (201) comprend une partie de connexion (234) pour connecter la partie de siège de vanne (233) et la partie de diaphragme (205c), et dans lequel
la partie de connexion (234) est formée dans une forme d'arc de cercle dans une vue en coupe dans une direction parallèle à l'axe central.
